Europäisches Patentamt

European Patent Office

Office européen des brevets

(11) Numéro de publication: **0 345 145**
**A1**

## (12) DEMANDE DE BREVET EUROPEEN

(21) Numéro de dépôt: **89401473.7**

(22) Date de dépôt: **30.05.89**

(51) Int. Cl.⁴: **G 02 C 5/22**

(30) Priorité: **31.05.88 FR 8807209**

(43) Date de publication de la demande:
**06.12.89 Bulletin 89/49**

(84) Etats contractants désignés:
**CH DE ES GB IT LI**

(71) Demandeur: **ESSILOR INTERNATIONAL Cie Générale d'Optique**
**1 Rue Thomas Edison Echat 902**
**F-94028 Creteil Cédex (FR)**

(72) Inventeur: **Hubin, Claude**
**Côte de Bar**
**F-55300 Saint Mihiel (FR)**

(74) Mandataire: **CABINET BONNET-THIRION**
**95 Boulevard Beaumarchais**
**F-75003 Paris (FR)**

(54) **Charnière, notamment pour monture de lunettes, et monture de lunettes équipée d'une telle charnière.**

(57) Cette charnière comporte, articulés par une vis (13), deux charnons (14A, 14B), avec, liée à l'un d'eux, une came (23), et, associé à l'autre, un organe suiveur (24), ladite vis (13) comportant par ailleurs un tronçon lisse (18), par lequel elle traverse librement l'un desdits charnons (14A, 14B), et un tronçon fileté (19), par lequel elle est en prise à vissage avec l'autre.

Suivant l'invention, au droit de l'oeil (16) du charnon (14B) qu'il traverse librement, le tronçon lisse (18) de la vis (13) présente, en décrochement, une portion de moindre diamètre (29), en sorte que ledit oeil (16) est engagé entre deux épaulements (30, 31) de cette vis (13), ce qui assure la retenue axiale de celle-ci.

Application, notamment, aux montures de lunettes.

FIG.2

EP 0 345 145 A1

**Description**

**"Charnière, notamment pour monture de lunettes, et monture de lunettes équipée d'une telle charnière"**

La présente invention concerne d'une manière générale les charnières, qui, ainsi qu'on le sait, sont globalement constituées de deux charnons, à un ou plusieurs yeux, articulés l'un à l'autre par une broche.

Elle vise plus particulièrement celles de ces charnières, qui, dites élastiques, comportent, liée à l'un des charnons, une came, et, associé à l'autre, un organe suiveur que des moyens élastiques sollicitent en permanence en direction de ladite came.

Tout en autorisant une libre articulation des charnons, et donc des pièces qu'ils relient, entre deux positions relatives bien déterminées, l'une de repliement, l'autre de déploiement, la came ainsi mise en oeuvre assure avantageusement un rappel élastique de ces deux charnons l'un par rapport à l'autre lorsqu'une de ces positions, la position de déploiement, est dépassée.

Les charnières élastiques de ce type trouvent, en particulier, leur application, dans les montures de lunettes, pour l'articulation des branches latérales de celles-ci.

C'est le cas, par exemple, dans le brevet américain No 4.222.148 et dans les demandes de brevet français Nos 2.028.893 et 2.334.808.

L'un des problèmes à résoudre dans la réalisation des charnières élastiques ainsi destinées à l'équipement de montures de lunettes tient à la broche mise en oeuvre, dont le maintien axial par rapport aux charnons doit être convenablement assuré.

Le plus souvent, cette broche est, pour ce faire, une vis, cette vis comportant un troncon lisse, par lequel elle traverse librement l'un des charnons, et un tronçon fileté, par lequel, pour son maintien axial, elle est en prise à vissage avec l'autre de ceux-ci.

Si, du point de vue fonctionnel, les charnières ainsi constituées donnent toute satisfaction, elles ne sont pas à l'abri d'un dévissage intempestif de leur vis d'articulation, au risque de la perte de celle-ci et, ainsi, de l'annihilation de l'assemblage à la constitution duquel elles participent, avec tous les incidents qui peuvent en résulter.

La présente invention a d'une manière générale pour objet une disposition permettant de remédier à cet inconvénient, en assurant une retenue axiale convenable d'une telle vis d'articulation.

De manière plus précise, elle a pour objet une charnière, notamment pour monture de lunettes, du genre comportant, articulés l'un à l'autre par une vis, deux charnons, avec, liée à l'un de ces charnons, une came, et, associé à l'autre, un organe suiveur que des moyens élastiques sollicitent en permanence en direction de ladite came, ladite vis d'articulation comportant par ailleurs un tronçon lisse, par lequel elle traverse librement l'un desdits charnons, et un tronçon fileté, par lequel elle est en prise à vissage avec l'autre de ceux-ci, cette charnière étant d'une manière générale caractérisée en ce que, au droit, au moins, du charnon qu'il traverse librement, le tronçon lisse de la vis d'articulation présente, en décrochement, une portion de moindre diamètre dont la hauteur axiale est au moins égale à l'épaisseur de l'oeil concerné dudit charnon, et dont il résulte la présence, sur cette vis d'articulation, du côté, au moins, de son tronçon fileté, d'un épaulement transversal propre à sa retenue axiale par ledit oeil.

Du fait de sa portion de moindre diamètre, le tronçon lisse de la vis d'articulation traverse avec jeu l'oeil en cause du charnon concerné, et, du fait des moyens élastiques intervenant entre la came et l'organe suiveur par ailleurs mis en oeuvre, et, donc, intervenant, par l'intermédiaire de ce dernier, entre les deux charnons, il se fait automatiquement, à la faveur dudit jeu, un déport relatif entre cette portion de moindre diamètre du tronçon lisse de la vis d'articulation et l'oeil du charnon que traverse celui-ci, ce qui conduit l'épaulement transversal correspondant de cette vis d'articulation à s'engager localement sous cet oeil, en assurant ainsi, comme recherché, la retenue axiale de la vis d'articulation par rapport à celui-ci, et donc par rapport à l'ensemble.

Ainsi, suivant l'invention, il est avantageusement tiré un parti supplémentaire des moyens élastiques mis en oeuvre par ailleurs dans les charnières du genre concerné.

Les caractéristiques et avantages de l'invention ressortiront d'ailleurs de la description qui va suivre, à titre d'exemple, en référence aux dessins schématiques annexés sur lesquels :

la figure 1 est une vue en perspective d'une monture de lunettes équipée de charnières suivant l'invention ;

la figure 2 est à échelle supérieure, une vue partielle en coupe de cette monture de lunettes, suivant la ligne II-II de la figure 1 ;

la figure 3 est une vue en élévation de la vis d'articulation mise en oeuvre dans une charnière suivant l'invention ;

la figure 4 est une vue partielle en coupe analogue à celle de la figure 2 illustrant la mise en place de cette vis d'articulation ;

la figure 5 est une vue partielle en coupe analogue à celle de la figure 2, pour une variante de mise en oeuvre de l'invention.

Ces figures illustrent, à titre d'exemple, l'application de l'invention à une monture de lunettes.

De manière usuelle, cette monture de lunettes comporte un face 10 et deux branches latérales 11 dont chacune est articulée à ce face 10 par une charnière 12.

De manière également usuelle, chacune des charnières 12 ainsi mises en oeuvre comporte, articulés l'un à l'autre par une vis 13, deux charnons 14A, 14B.

En pratique, le charnon 14A, dit ci-après par simple commodité charnon double, comporte, pour la traversée de la vis d'articulation 13, deux yeux 15, et, ainsi en forme de chape, il encadre l'oeil unique 16 que présente corollairement le charnon 14B, dit ci-après par simple commodité charnon simple.

La vis d'articulation 13 correspondante comporte, par ailleurs, outre une tête 17 propre à sa manoeuvre, d'une part, un tronçon lisse 18, par lequel elle traverse librement le charnon simple 14B, et, plus précisément, l'oeil 16 de celui-ci, après avoir traversé, également librement, l'oeil 15 du charnon double 14A disposé du côté de sa dite tête 17, et, d'autre part, un tronçon fileté 19 par lequel elle est en prise, à vissage, avec l'autre oeil 15 du charnon double 14A.

Pour sa traversée par cette vis d'articulation 13, l'oeil 16 du charnon simple 14B présente un perçage lisse 20.

De même, pour sa traversée par la vis d'articulation 13, l'oeil 15 du charnon double 14A disposé du côté de la tête 17 de cette vis d'articulation 13 présente un perçage 21, qui, à son débouché à l'extérieur, est, en pratique, façonné à l'image de ladite tête 17, en présentant un évasement complémentaire de la partie correspondante de celle-ci, et, pour sa coopération en vissage avec le tronçon fileté 19 de cette vis d'articulation 13, l'autre oeil 15 de ce charnon double 14A présente un perçage taraudé 22.

S'agissant de charnières élastiques, les charnières 12 ainsi constituées comportent, en outre, chacune, liée à l'un de leurs charnons, et en pratique à leur charnon simple 14B, une came 23, et, associé à l'autre de leurs charnons, et, donc, en pratique, à leur charnon double 14A, un organe suiveur 24 que des moyens élastiques sollicitent en permanence en direction de ladite came 23, pour contact avec celle-ci.

En pratique, la came 23 est formée par la tranche de l'oeil 16 du charnon simple 14B, et, dans les formes de mise en oeuvre représentées, l'organe suiveur 24 est constitué par une bille montée mobile dans un alésage borgne 25 prévu à cet effet dans le charnon double 14A, cependant que les moyens élastiques associés à cet organe suiveur 24 sont constitués par un ressort à boudin 27 prenant appui sur le fond de cet alésage borgne 25.

Les dispositions correspondantes étant bien connues par elles-mêmes, et ne faisant pas partie de la présente invention, elles ne seront pas décrites plus en détail ici.

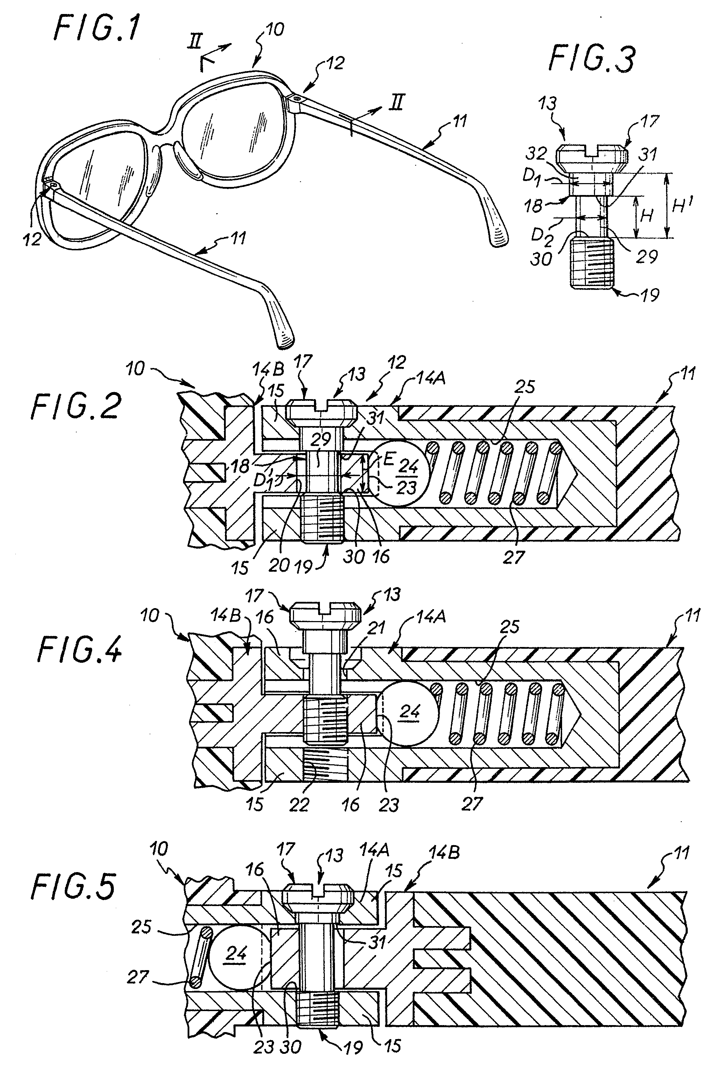

Dans la forme de mise en oeuvre illustrée par les figures 1 à 4, le charnon simple 14B, celui auquel est liée la came 23, est solidaire du face 10, cependant que le charnon double 14A, celui auquel est associé l'organe suiveur 24, est solidaire de la branche latérale 11 concernée.

Suivant la forme de mise en oeuvre illustrée par la figure 5, la disposition est, en variante, inverse, le charnon simple 14B étant solidaire de la branche latérale 11 cependant que le charnon double 14A est solidaire du face 10.

Il doit donc être considéré comme acquis que la présente invention s'applique indifféremment à l'une ou l'autre de ces formes de mise en oeuvre.

Suivant l'invention, au droit, au moins, du charnon 14B qu'il traverse librement, et, plus précisément, au droit de l'oeil 16 de celui-ci, le tronçon lisse 18 de la vis d'articulation 13 présente, en décrochement, radialement et annulairement, une portion de moindre diamètre 29, dont la hauteur axiale H est au moins égale à l'épaisseur de ce charnon simple 14B, et plus précisément, à l'épaisseur E de l'oeil 16 plus particulièrement concerné de celui-ci, et dont il résulte la présence, sur cette vis d'articulation 13, du côté, au moins, de son tronçon fileté 19, d'un épaulement transversal 30.

Dans la forme de réalisation représentée, cet épaulement transversal 30 délimite, du côté du tronçon fileté 19, la portion de moindre diamètre 29 du tronçon lisse 18, en formant donc exactement la frontière entre ce tronçon lisse 18 et ce tronçon fileté 19.

En outre, dans cette forme de réalisation, la portion de moindre diamètre 29 du tronçon lisse 18 ne s'étend que sur une partie H de la hauteur H' de celui-ci, en sorte qu'il en résulte, également, la présence, sur la vis d'articulation 13, du côté opposé à son tronçon fileté 19, ou, autrement dit, du côté de sa tête 17, d'un autre épaulement transversal 31, qui, axialement tourné vers l'épaulement transversal 30 précédent, délimite, de ce côté, cette portion de moindre diamètre 29.

La hauteur axiale H de la portion de moindre diamètre 29 du tronçon lisse 18 est alors mesurée entre ces deux épaulements 30 et 31, et, entre sa portion de moindre diamètre 29 et la tête 17, le tronçon lisse 18 comporte alors une portion à plein diamètre 32.

En pratique, le diamètre D1 de celle-ci, supérieur au diamètre D2 de la portion de moindre diamètre 29, est égal au diamètre extérieur du tronçon fileté 19.

Pour le passage de ce tronçon fileté 19, le perçage de l'oeil 16 du charnon simple 14B présente lui-même un diamètre D'1 légèrement supérieur, et donc supérieur au diamètre D2 de la portion de moindre diamètre 29.

Il en résulte un certain jeu entre l'oeil 16 du charnon simple 14B et la portion de moindre diamètre 29 par laquelle la vis d'articulation 13 traverse celui-ci.

Du fait du ressort 27, les charnons 14A, 14B sont sollicités en écartement l'un par rapport à l'autre, en sorte que, compte tenu du jeu précédent, l'oeil 16 du charnon simple 14B s'engage entre les épaulements 30, 31 de la vis d'articulation 13, et que, par conséquent, l'épaulement 30 de celle-ci s'engage sous cet oeil 16.

Il s'oppose dès lors à tout dévissage intempestif de la vis d'articulation 13.

Autrement dit, par son épaulement transversal 30, la vis d'articulation 13 est en quelque sorte crochetée sur l'oeil 16 du charnon simple 14B, en étant maintenue ainsi crochetée sur celui-ci par le ressort 27.

A la mise en place, et tel que représenté à la figure 4, il suffit de rapprocher l'un de l'autre, à l'encontre du ressort 27, la branche 11 et le face 10 pour que, l'oeil 16 du charnon simple 14B se trouvant dans l'axe des yeux 15 du charnon double 14A, la vis 13 d'articulation puisse être effectivement engagée dans les perçages 21, 22, successifs de ces yeux 15.

Après vissage de la vis d'articulation 13, il suffit, ensuite, de relâcher la branche latérale 11 par rapport au face 10, pour que, comme indiqué ci-dessus, sous la sollicitation du ressort 27, l'oeil 16 du charnon simple 14B s'engage entre les épaulements 30 et 31 de la vis d'articulation 13.

Bien entendu, la présente invention ne se limite pas aux formes de mise en oeuvre décrites et représentées, mais englobe toute variante d'exécution.

En particulier, la portion de moindre diamètre du tronçon lisse de la vis d'articulation mise en oeuvre peut s'étendre sur toute la hauteur de celui-ci, entre le tronçon fileté de cette vis d'articulation et sa tête.

Le domaine d'application de l'invention ne se limite pas non plus nécessairement à celui des seules montures de lunettes.

**Revendications**

1. Charnière, notamment pour monture de lunettes, du genre comportant, articulés l'un à l'autre par une vis (13), deux charnons (14A, 14B), avec, liée à l'un de ces charnons (14A, 14B), une came (23), et, associé à l'autre, un organe suiveur (24) que des (moyens élastiques (27) sollicitent en permanence en direction de ladite came (23), ladite vis d'articulation (13) comportant par ailleurs un tronçon lisse (18), par lequel elle traverse librement l'un desdits charnons (14A, 14B), et un tronçon fileté (19), par lequel elle est en prise à vissage avec l'autre de ceux-ci, caractérisée en ce que, au droit, au moins, du charnon (14B) qu'il traverse librement, le troncon lisse (18) de la vis d'articulation (13) présente, en décrochement, une portion de moindre diamètre (29), dont la hauteur axiale (H) est au moins égale à l'épaisseur (E) de l'oeil (16) concerné de ce charnon (14B), et dont il résulte la présence, sur cette vis d'articulation (13), du côté, au moins, de son tronçon fileté (19), d'un épaulement transversal (30) propre à sa retenue axiale par ledit oeil (16).

2. Charnière suivant la revendication 1, caractérisée en ce que l'épaulement transversal (30) de la vis d'articulation (13) délimite, du côté de son tronçon fileté (19), la portion de moindre diamètre (29) de son tronçon lisse (18).

3. Charnière suivant l'une quelconque des revendications 1, 2, caractérisée en ce que la portion de moindre diamètre (29) du tronçon lisse (18) de la vis d'articulation (13) ne s'étend que sur une partie (H) de la hauteur (H') de celui-ci, en sorte qu'il en résulte, également, la présence, sur cette vis d'articulation (13), du côté opposé à son tronçon fileté (19), d'un épaulement transversal (31) délimitant, de ce côté, ladite portion de moindre diamètre (29) de ce tronçon lisse (18).

4. Monture de lunettes du genre dont chacune des branches latérales (11) est articulée par une charnière (12) à son face (10), caractérisée en ce que ladite charnière (12) est conforme à l'une quelconque des revendications 1 à 3.

FIG.1

FIG.3

FIG.2

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 003 928 (LAMY & FILS) <br> * Page 3, dernier paragraphe, page 4 * <br> --- | 1-3 | G 02 C 5/22 |
| A | FR-A-2 546 314 (WAKAYOSHI SUTEICHI) <br> * Page 5, lignes 22-39, page 6, lignes 1-12 * <br> --- | 1-3 | |
| A | US-A-4 145 124 (W.C. WEISGERBER) <br> * Colonne 3, lignes 59-68, colonne 4, lignes 1-10 * <br> --- | 1-3 | |
| A | US-A-3 546 735 (P.J. LIAUTAUD) <br> * Colonne 3, lignes 6-75, colonne 4, lignes 1-43 * <br> --- | 1-3 | |
| A | US-A-4 494 834 (V. TABACCHI) <br> --- | | |
| A | FR-A-2 118 462 (S. WAKAYOSHI) <br> ----- | | |

**DOMAINES TECHNIQUES RECHERCHES (Int. Cl.4)**

G 02 C 5/22

Le présent rapport a été établi pour toutes les revendications

| Lieu de la recherche | Date d'achèvement de la recherche | Examinateur |
|---|---|---|
| LA HAYE | 16-08-1989 | CALLEWAERT-HAEZEBROUCK H |

EPO FORM 1503 01.82 (P0402)